# EUROPÄISCHE PATENTSCHRIFT

(11) **EP 0 901 091 B1**
(45) Veröffentlichungstag und Bekanntmachung des Hinweises auf die Patenterteilung: **29.12.2004**
(21) Anmeldenummer: 98202852.4
(22) Anmeldetag: 26.08.1998
(51) Int. Cl.: G06K 7/00

(54) **Lademechanismus zum Be- und/oder Entladen eines elektronischen Gerätes mit wenigstens einer Speicherkarte**
Load mechanism for loading and/or unloading en electronic device with at least one memory card
Mécanisme pour le chargement et/ou le déchargement d'un dispositif électronique avec au moins une carte de mémoire

(30) Priorität: 02.09.1997 DE 19738227
(43) Veröffentlichungstag der Anmeldung: 10.03.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Müller, Stefan, Röntgenstrasse 24, 22335 Hamburg (DE); Rumpf, Horst, Röntgenstrasse 24, 22335 Hamburg (DE)
(74) Vertreter: von Laue, Hanns-Ulrich, Dipl.-Ing.

(56) Entgegenhaltungen:
- EP-A- 0 459 584
- DE-A- 3 930 953
- US-A- 4 933 537
- US-A- 5 150 352

## Beschreibung

Die Erfindung bezieht sich auf einen Lademechanismus zum Be- und/oder Entladen eines elektronischen Gerätes mit wenigstens einer Speicherkarte, wobei
ein erster Transportmechanismus zum Transport der Speicherkarte zwischen einer Auswurfposition und einer Zwischenposition,
ein zweiter Transportmechanismus zum Transport der Speicherkarte zwischen der Zwischenposition und einer Spielposition,
und ein Motor zum Antrieb der beiden Transportmechanismen vorgesehen sind.

Ein derartiger Lademechanismus ist aus der JP 05046816 A bekannt. Dieser bekannte Lademechanismus weist als ersten Transportmechanismus zwei Rollen auf, die auf einer Antriebswelle angeordnet sind und die Speicherkarte mittels Andruck auf deren Oberfläche kraftschlüssig von der Auswurfposition in die Zwischenposition transportieren. Als Aufwurfposition wird die Position bezeichnet, in der die Speicherkarte von der Hand einer Bedienperson aus dem elektronischen Gerät entnommen werden kann. Die Zwischenposition befindet sich kurz vor einem Steckerelement des elektronischen Gerätes, welches dazu vorgesehen ist, ein Steckerelement der Speicherkarte zu kontaktieren. Die Position, in der das Steckerelement der Speicherkarte mit dem Steckerelement des elektronischen Gerätes kontaktiert ist und in der demzufolge auf der Speicherkarte gespeicherte Informationen von dem elektronischen Gerät ausgelesen werden können oder von dem elektronischen Gerät Informationen in die Speicherkarte eingeschrieben werden können, wird als Spielposition bezeichnet.

Als Antriebseinheit ist bei dieser bekannten Konstruktion ein Elektromotor vorgesehen, der unter Zwischenschaltung eines ersten Getriebes die Antriebswelle antreibt. Der erste Transportmechanismus transportiert die Speicherkarte mit einer relativ hohen Geschwindigkeit und einer relativ geringen Einzugskraft. Als zweiter Transportmechanismus ist ein Schwenkhebel vorgesehen, der mit einer Verzahnung in ein Untersetzungsgetriebe einschwenkbar ist. Das Untersetzungsgetriebe ist als Zahnradgetriebe ausgebildet. Der Schwenkhebel drückt mittels zweier Führungsstifte die Speicherkarte mit einer großen Kraft in das Steckerelement des elektronischen Gerätes hinein. Die Ansteuerung der Führungsstifte erfolgt mittels eines Hubmagneten.

Eine derartige Konstruktion benötigt viel Bauraum und eine Vielzahl von Einzelteilen.

Es ist Aufgabe der Erfindung, einen Lademechanismus der eingangs genannten Art zu schaffen, der mit weniger Einzelteilen und einem geringeren Bauvolumen realisierbar ist.

Diese Aufgabe ist erfindungsgemäß dadurch gelöst, daß zum Transport der Speicherkarte zwischen der Zwischenposition und der Spielposition der zweite Transportmechanismus mittels eines Schraubengetriebes mit dem Motor koppelbar ist.

Als Schraubengetriebe wird ein Getriebe bezeichnet, das aus einer Kombination einer Gewindespindel und einer in das Gewinde der Gewindespindel eingreifenden Gewindemutter besteht. Ein Schraubengetriebe wandelt somit eine Drehbewegung in eine Schubbewegung um bzw. eine Schubbewegung in eine Drehbewegung. Mit einem derartigen Schraubengetriebe kann eine große Untersetzung auf kleinem Bauraum realisiert werden.

Zum Transport der Speicherkarte zwischen der Auswurfposition und der Zwischenposition treibt die Antriebseinheit den ersten Transportmechanismus direkt oder über eine Getriebestufe an. Dies erfolgt vorzugsweise mit einer relativ großen Geschwindigkeit und einer relativ kleinen Einschubkraft. Ab der Zwischenposition ist dann jedoch eine große Einschubkraft erforderlich, um die Speicherkarte in das Steckerelement des elektronischen Gerätes hineinzudrücken und eine sichere Kontaktierung zu gewährleisten. Hierfür ist der zweite Transportmechanismus vorgesehen, der von der Antriebseinheit unter Zwischenschaltung des Schraubengetriebes angetrieben wird. Das Schraubengetriebe sorgt für die nötige Untersetzung, um die Speicherkarte mit einer großen Kraft in das Steckerelement des elektronischen Gerätes hineinzudrücken.

Mit einer derartigen Konstruktion kann auf voluminöse Zahnradgetriebe verzichtet werden, wodurch der Bauraum des Lademechanismus reduziert wird.

Die Ausgestaltung des Lademechanismus gemäß Anspruch 2 stellt eine vorteilhafte Realisierung des ersten Transportmechanismus dar. Die Antriebswelle erstreckt sich vorzugsweise oberhalb bzw. unterhalb der Ladeebene der Speicherkarte. Auf der Antriebswelle sind ein oder mehrere Antriebsrollen angeordnet, welche vorzugsweise aus Gummi bestehen. Beim Transport der Speicherkarte zwischen der Auswurfposition und der Zwischenposition sind die Antriebsrollen mit der Antriebswelle beispielsweise kraft- oder formschlüssig gekoppelt, so daß sie sich mit der Antriebswelle mitdrehen. Dabei drücken die Antriebsrollen vorzugsweise auf die Ober- oder Unterseite der Speicherkarte, und infolge der Reibkraft wird die Speicherkarte mittels der Antriebsrollen von der Auswurfposition in die Zwischenposition tranportiert.

Gemäß einer vorteilhaften Ausgestaltung der Erfindung wird das Schraubengetriebe auf der Antriebswelle angeordnet. Dadurch wird die ohnehin vorhandene Antriebswelle für das Schraubengetriebe genutzt, wodurch zusätzlicher Bauraum bzw. Bauteile eingespart werden. Dies wird vorzugsweise mit den Merkmalen des Patentanspruches 4 realisiert. Bei dieser Ausgestaltung gemäß Anspruch 4 erfolgt die Ansteuerung des jeweiligen Transportmechanismus mittels des Koppelmechanismus, der z.B. als Koppelhebel ausgeführt werden kann. Im Bereich der Zwischenposition koppelt der Koppelmechanismus beim Laden der Speicherkarte die Antriebsrollen aus, d.h., daß diese nicht mehr kraft- oder formschlüssig mit der Antriebswelle gekoppelt sind und somit keine Kraftübertragung von der Antriebswelle auf die Antriebsrolle erfolgt. Gleichzeitig wird die auf der Antriebswelle axial verschieblich angeordnete Koppelmutter in das Schraubengewinde eingekoppelt, wodurch das Schraubengetriebe gebildet wird und die Antriebskraft der Antriebseinheit unter Zwischenschaltung dieses Schraubengetriebes auf den zweiten Transportmechanismus übertragen wird. Beim Entladen der Speicherkarte wird im Bereich der Zwischenposition in entsprechender Weise die Koppelmutter aus dem Schraubengewinde ausgekoppelt und gleichzeitig werden die Antriebsrollen kraftoder formschlüssig mit der Antriebswelle gekoppelt, so daß beim Entladen der Speicherkarte der erste Transportmechanismus ab der Zwischenposition die Transportfunktion wieder von dem zweiten Transportmechanismus übernimmt.

Dadurch, daß die Antriebsrollen und das Schraubengewinde nebeneinander auf der gleichen Antriebswelle angeordnet sind, läßt sich der Koppelmechanismus einfach und platzsparend realisieren, und der Koppelmechanismus kann gleichzeitig zum Ansteuern des ersten des zweiten Transportmechanismus verwendet werden.

Bei der vorteilhaften Ausgestaltung gemäß Patentanspruch 5 ist der Transportschlitten beim Transport der Speicherkarte von der Zwischenposition in die Spielposition formschlüssig mit der Speicherkarte gekoppelt. Ein derartiger Formschluß ermöglicht auch die Übertragung großer Kräfte, ohne daß zwischen dem Transportschlitten und der Speicherkarte Schlupf auftritt. Bei dieser Ausgestaltung wird die Linearbewegung der Koppelmutter des Schraubengetriebes mittels des Koppelhebels in eine Linearbewegung des Transportschlittens umgewandelt.

Der Transportschlitten weist gemäß Patentanspruch 6 vorzugsweise eine hintere Anschlagkante und eine vordere Anschlagkante auf. Die hintere Anschlagkante drückt beim Transport der Speicherkarte von der Zwischenposition in die Spielposition gegen die rückwärtige Kante der Speicherkarte und drückt die Speicherkarte in das Steckerelement des elektronischen Gerätes. Beim Entladen der Speicherkarte drückt die vordere Anschlagkante gegen die Vorderkante der Speicherkarte und drückt die Speicherkarte aus dem Steckerelement des elektronischen Gerätes heraus. Somit ist sowohl beim Beladen als auch beim Entladen ein Formschluß der Speicherkarte mit dem Transportschlitten gewährleistet, so daß sowohl beim Beladen als auch beim Entladen ein schlupffreier Transport der Speicherkarte zwischen der Spielposition und der Zwischenposition gewährleistet ist.

Die zweiteilige Ausbildung des Transportschlittens mit den Merkmalen gemäß Patentanspruch 7 hat gegenüber einer einteiligen Ausbildung des Transportschlittens den Vorteil, daß weniger Bauvolumen und insbesondere Bauhöhe benötigt wird, da nicht der gesamte Transportschlitten, sondern nur ein Teil des Transportschlittens verschwenkt werden muß. Der für das Verschwenken vorgesehene hintere Teil des Transportschlittens wird vorzugsweise kürzer ausgebildet als der vordere Teil des Transportschlittens. Dadurch werden die für das Verschwenken erforderlichen Kräfte minimiert.

Beim Laden der Speicherkarte ist der hintere Teil mit der hinteren Anschlagkante zunächst nach unten von der Speicherkarte weggeschwenkt, so daß die Speicherkarte mittels des ersten Transportmechanismus in das elektronische Gerät eingefahren werden kann, ohne von der hinteren Anschlagkante gestört zu werden. Kurz vor Erreichen der Zwischenposition wird dann das hintere Teil mit der hinteren Anschlagkante nach oben auf die Speicherkarte zu geschwenkt, wodurch die hintere Anschlagkante des hinteren Teils hinter die rückwärtige Kante der Speicherkarte gerät und dann ab der Zwischenposition gegen die rückwärtige Kante der Speicherkarte drückt, wodurch die Speicherkarte in das Steckerelement des elektronischen Gerätes gedrückt wird. In umgekehrter Weise wird beim Entladen der Speicherkarte das hintere Teil des Tranportschlittens mit der hinteren Anschlagkante nach Erreichen der Zwischenposition nach unten weggeschwenkt, so daß nachfolgend die Speicherkarte von dem ersten Transportmechanismus in die Auswurfposition befördert werden kann.

Die Antriebsrolle wird gemäß den Merkmalen von Anspruch 8 vorzugsweise drehbar auf der Antriebswelle gelagert. Dadurch wird es möglich, daß die Antriebsrolle beim Transport der Speicherkarte zwischen der Zwischenposition und der Spielposition keine Antriebskraft auf die Speicherkarte ausübt. Die Antriebsrolle befindet sich vielmehr im Leerlauf und dreht sich nur noch langsam entsprechend der Bewegungsgeschwindigkeit des Transportschlittens und der Speicherkarte infolge der Reibkraft zwischen der Antriebsrolle und der Speicherkarte mit. Dadurch wird vermieden, daß sich die Antriebsrolle beim Transport der Speicherkarte zwischen der Zwischenposition und der Spielposition mit der relativ hohen Geschwindigkeit der Antriebswelle mitdreht, was zu einem Schlupf mit entsprechendem Abrieb zwischen der Speicherkarte und der Antriebsrolle führen könnte. Die Antriebskraft der Antriebsrolle wird nur zwischen der Auswurfposition und der Zwischenposition mittels einer Reib- oder Klauenkupplung auf die Antriebsrolle übertragen.

Ein Ausführungsbeispiel der Erfindung wird nachfolgend anhand der Zeichnung in den Fig. 1 bis 5 näher erläutert. Es zeigen:
Fig. 1 eine perspektivische Darstellung eines Lademechanismus zum Be- oder Entladen eines elektronischen Gerätes mit einer Speicherkarte, wobei das elektronische Gerät ein Steckerelement zum Kontaktieren der Speicherkarte aufweist und wobei als erster Transportmechanismus eine Antriebsrolle und als zweiter Transportmechanismus ein Transportschlitten vorgesehen sind,
Fig. 2 eine Draufsicht auf den Lademechanismus mit der Speicherkarte in einer Auswurfposition, in welcher die Speicherkarte von der Hand einer Bedienperson entnommen werden kann,
Fig. 3 eine weitere Draufsicht auf den Lademechanismus, wobei die Speicherkarte von dem ersten Transportmechanismus bis kurz vor das Steckerelement des elektronischen Gerätes transportiert worden ist und wobei die Antriebsrolle des ersten Transportmechanismus ausgekoppelt und ein Schraubengetriebe zum Antrieb des Transportschlittens gerade eingekoppelt worden ist,
Fig. 4 den Lademechanismus in Draufsicht in der Spielposition, in der das Steckerelement der Speicherkarte in das Steckerelement des elektronischen Gerätes gedrückt ist, so daß ein Informationsaustausch zwischen dem elektronischen Gerät und der Speicherkarte möglich ist,
Fig. 5a eine schematische Darstellung in Seitenansicht des Transportschlittens und der Speicherkarte in der Auswurfposition, wobei ein hinterer Teil des Transportschlittens nach unten unter die Speicherkarte weggeschwenkt ist,
Fig. 5b eine Seitenansicht gemäß Fig. 5a, wobei die Speicherkarte eine vordere Anschlagkante des Transportschlittens erreicht hat,
Fig. 5c eine schematische Seitenansicht gemäß den Fig. 5a und 5b, wobei der hintere Teil des Transportschlittens hochgeschwenkt ist und die hintere Anschlagkante des Transportschlittens gegen die rückwärtige Kante der Speicherkarte drückt,
Fig. 5d eine schematisch dargestellte Seitenansicht gemäß den Fig. 5a bis 5c, wobei sich der Lademechanismus in der Spielposition befindet.

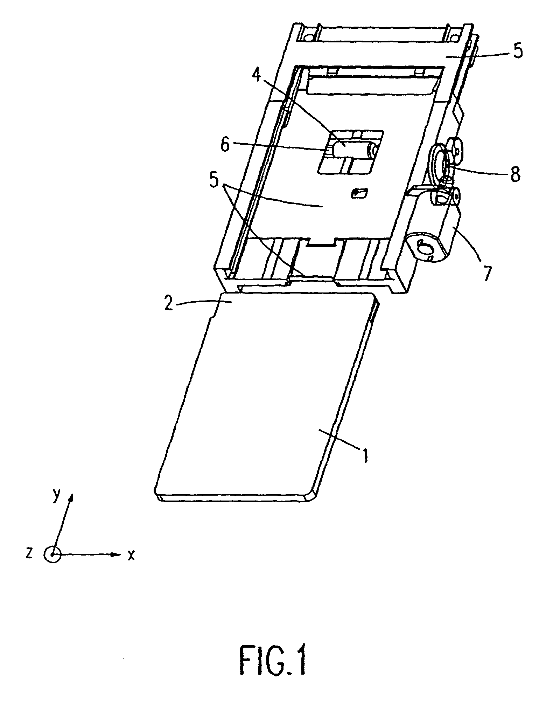

Fig. 1 zeigt einen Lademechanismus eines elektronischen Gerätes für eine Speicherkarte 1. Eine derartige Speicherkarte 1 kann beispielsweise eine Speicherkarte gemäß dem PCMCIA-Standard sein. Die Speicherkarte 1 weist ein Steckerelement 2 mit einer Vielzahl nicht näher dargestellter Steckkontakte sowie eine Vorderkante 1a und eine rückwärtige Kante 1b auf. Zum Kontaktieren der Speicherkarte 1 weist das nicht näher dargestellte elektronische Gerät ein Steckerelement 3 auf, welches mit dem Steckerelement 2 der Speicherkarte 1 in Eingriff bringbar ist.

Zum Be- bzw. Entladen der Speicherkarte 1 weist der Lademechanismus als ersten Transportmechanismus eine Antriebsrolle 4 und als zweiten Transportmechanismus einen Transportschlitten 5 auf. Die Antriebsrolle 4 ist auf einer Antriebswelle 6 angeordnet, welche mittels eines Motors 7 unter Zwischenschaltung eines Getriebes 8 in zwei Richtungen drehend antreibbar ist.

Das Laden der Speicherkarte erfolgt in einer Laderichtung y. Die Antriebswelle 6 erstreckt sich orthogonal zu dieser Laderichtung y in einer x-Richtung. Die Laderichtung y und die x-Richtung bilden eine Ladeebene x-y. Senkrecht zu dieser Ladeebene x-y sei eine z-Richtung definiert.

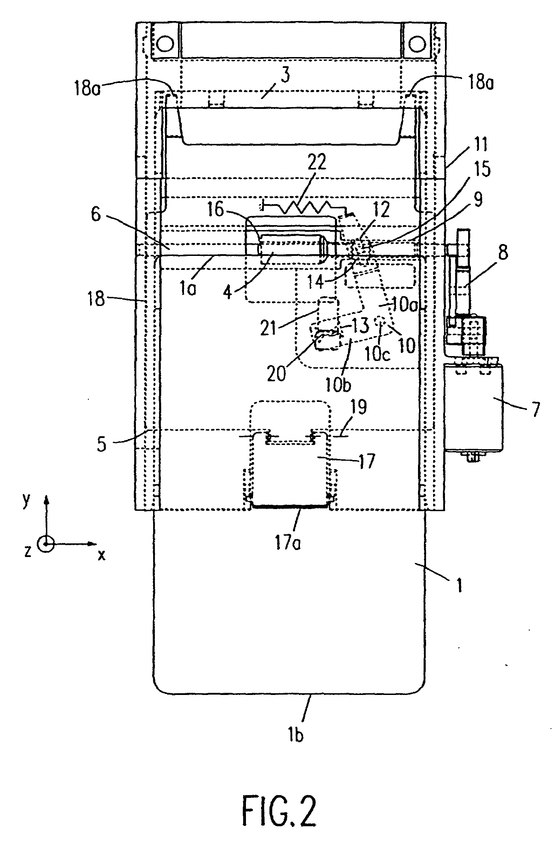

Fig. 2 zeigt eine Draufsicht auf den Lademechanismus, wobei sich die Speicherkarte 1 in einer Auswurfposition befindet, in der die Speicherkarte 1 von der Hand einer Bedienperson entnommen werden kann bzw. in die die Speicherkarte zum Beladen von der Hand einer Bedienperson eingebracht werden muß. Die Antriebsrolle 4 ist konzentrisch auf der Antriebswelle 6 angeordnet, wobei zwischen der Antriebsrolle 4 und der Antriebswelle 6 ein Spiel besteht, so daß die Antriebsrolle 4 gegenüber der Antriebswelle 6 verdrehbar ist. Seitlich versetzt zu der Antriebsrolle 4 weist die Antriebswelle 6 ein Schraubgewinde 9 auf, welches eine kleine Steigung aufweist, die beispielsweise die Linearbewegung der Karte um den Faktor 10 untersetzt. Es ist ein Koppelhebel 10 vorgesehen, der drehbar um einen Drehpunkt 10c an einer Chassisplatte 11 des Lademechanismus angeordnet ist. Der Koppelhebel 10 ist L-förmig ausgebildet und weist einen ersten Arm 10a und einen zweiten Arm 10b auf. Der erste Arm 10a des Koppelhebels 10 weist eine Längsnut 12 und der zweite Arm 10b des Koppelhebels 10 eine Steuernut 13 auf.

Auf der Antriebswelle 6 ist eine Koppelmutter 14 mit einem Innengewinde axial verschieblich angelagert. Die Koppelmutter 14 weist einen runden Koppelstift 15 auf, der in die Längsnut 12 des Koppelhebels 10 eingreift. Mittels Verschwenken des Koppelhebels 10 kann die Koppelmutter 14 in Richtung der Längsachse der Antriebswelle 6 verschoben werden, wobei die Koppelmutter 14 mittels des Koppelstiftes 15 in der Längsnut 12 des Koppelhebels 10 geführt wird. Wird der Koppelhebel 10 im Uhrzeigersinn verschwenkt, so wird die Koppelmutter 14 mit dem Schraubengewinde 9 in Eingriff gebracht, wodurch ein Schraubengetriebe gebildet wird. Dieses Schraubengetriebe weist entsprechend der Steigung des Schraubengewindes 9 eine große Untersetzung auf. Verschwenkt der Koppelhebel 10 entgegen dem Uhrzeigersinn, so wird die Koppelmutter 14 gegen die Antriebsrolle 4 gedrückt. Dadurch wird die Antriebsrolle 4 gegen eine Anschlagkante 16 der Antriebswelle 6 gedrückt, wodurch jeweils ein Reibschluß zwischen der Anschlagkante 16 und der Antriebsrolle 4 sowie zwischen der Antriebsrolle 4 und der Koppelmutter 14 entsteht.

Der Transportschlitten 5 ist zweiteilig ausgebildet und weist ein hinteres Teil 17 und ein vorderes Teil 18 auf. Das hintere Teil 17 ist drehbar um eine Drehachse 19 an dem vorderen Teil 18 angelagert. Das hintere Teil 17 weist eine hintere Anschlagkante 17a und das vordere Teil 18 zwei vordere Anschlagkanten 18a auf.

Der Transportschlitten 5 weist eine hochgebogene, sich in der x-z-Ebene erstreckende Führungskante 20 auf, welche einerseits in der Steuernut 13 des Koppelhebels 10 und andererseits in einer sich in der y-Richtung erstreckenden Längsnut 21 der Chassisplatte 11 geführt ist. Das vordere Teil 18 wird mittels nicht näher dargestellter Führungsmittel in der Ladeebene x-y geführt. Das hintere Teil 17 ist, wie bereits beschrieben, drehbar um die Drehachse 19 an dem vorderen Teil 18 angelagert. Der Drehwinkel gegenüber der Ladeebene x-y wird von einer in der Fig. 2 nicht erkennbaren Führungskontur gesteuert.

Der Koppelhebel 10 ist mittels einer schematisch dargestellten Feder 22 entgegen dem Uhrzeigersinn vorgespannt.

In der in der Fig. 2 dargestellten Auswurfposition wird der Koppelhebel 10 mittels der Feder 22 in Richtung auf die Antriebsrolle 4 gedrückt. Dadurch wird auch die in der Längsnut 12 des Koppelhebels 10 geführte Koppelmutter 14 gegen die Antriebsrolle 4 gedrückt, wodurch die Antriebsrolle 4 gegen die Anschlagkante 16 gedrückt wird und ein Reibschluß zwischen der Antriebsrolle 4 und der Antriebswelle 6 entsteht. Zum Laden der Speicherkarte 1 wird der Motor 7 eingeschaltet, und die Antriebswelle 6 sowie die reibschlüssig mit der Antriebswelle 6 gekoppelte Antriebsrolle 4 werden gedreht. Die Antriebsrolle 4 drückt dabei auf die Oberfläche der Speicherkarte 1, wodurch ein Reibschluß entsteht und die Speicherkarte 1 kraftschlüssig von der Antriebsrolle 4 in der Laderichtung y transport wird. Die Transportgeschwindigkeit liegt dabei beispielsweise in einem Bereich von ca. 30 mm/sec und die Kraft, welche die Antriebsrolle 4 auf die Speicherkarte 1 ausübt, liegt beispielsweise in einem Bereich von ca. 3N.

Derart von der Antriebsrolle 4 angetrieben wird die Speicherkarte 1 so weit in das Gerät eingefahren, bis die Vorderkante 1a der Speicherkarte 1 gegen die vorderen Anschlagkanten 18a des Transportschlittens 5 erreicht. Nachfolgend wird der Transportschlitten 5 von der Speicherkarte 1 in der y-Richtung mitgenommen, und die Führungskante 20 des Transportschlittens 5 wird gegen die Steuernut 13 des Koppelhebels 10 gedrückt, wodurch der Koppelhebel 10 entgegen der Federkraft der Feder 22 im Uhrzeigersinn verschwenkt wird. Dadurch wird die Koppelmutter 14 von der Antriebsrolle 4 wegbewegt, und der Reibschluß zwischen der Antriebsrolle 4 und der Antriebswelle 16 wird aufgehoben. Annähernd gleichzeitig wird die Koppelmutter 14 in das Schraubengewinde 9 der Antriebswelle 16 eingekoppelt, wodurch das Schraubengetriebe aktiviert wird.

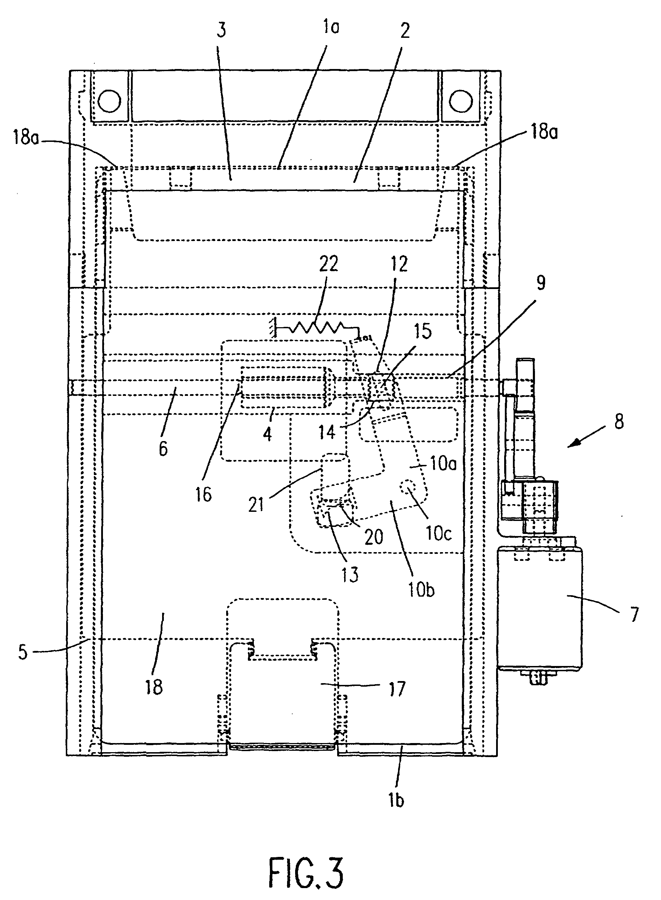

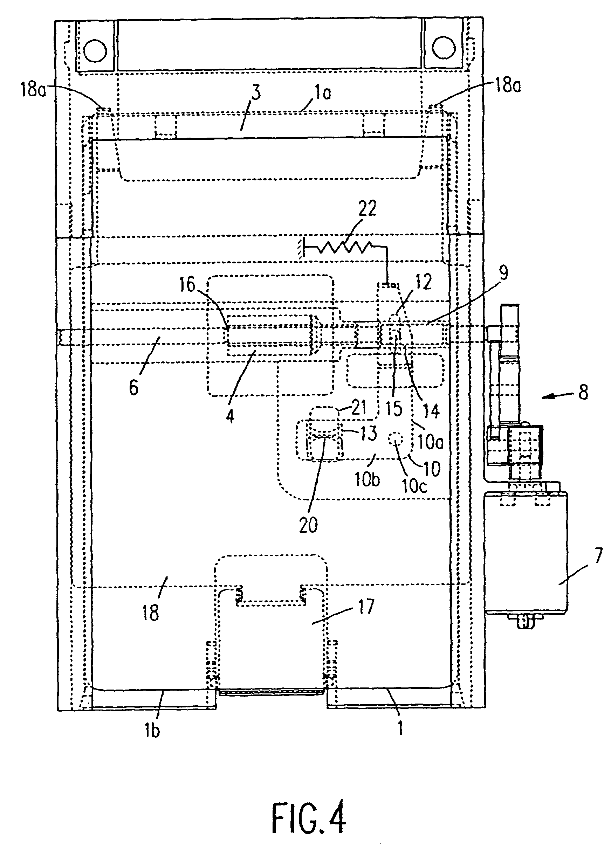

Fig. 3 zeigt die Position in Draufsicht, in der die Koppelmutter 14 gerade in das Schraubengewinde 9 der Antriebswelle 16 eingekoppelt worden ist. Sobald die Koppelmutter 14 in das Schraubengewinde 9 der Antriebswelle 16 eingekoppelt ist, übernimmt der Koppelhebel 10 den weiteren Transport des Transportschlittens 5, indem der Koppelhebel 10 mittels der Koppelmutter 14 im Uhrzeigersinn gedreht wird und dadurch die Steuernut 13 des Steuerhebels 10 gegen die Führungskante 20 des Transportschlittens 5 drückt. Infolge der großen Untersetzung des von dem Schraubengewinde 9 und der Koppelmutter 14 gebildeten Schraubengetriebes drückt der Koppelhebel 10 den Transportschlitten 5 mit einer hohen Kraft von beispielsweise 30N in Richtung auf das Steckerelement 3 des elektrischen Geräts. Für den Transport der Speicherkarte 1 wird das hintere Teil 17 des Transportschlittens 5 auf die Speicherkarte 1 zu geschwenkt, so daß die hintere Anschlagkante 17a hinter die rückwärtigen Kante 1b der Speicherkarte gelangt. Nachfolgend drückt die hintere Anschlagkante 17a des Transportschlittens 5 die Speicherkarte 1 mit einer großen Kraft in eine in der Fig. 4 dargestellte Spielposition. Der Transportschlitten 5 transportiert die Speicherkarte 1 mittels der hinteren Anschlagkante 17a formschlüssig, so daß kein Schlupf zwischen dem Transportschlitten 5 und der Speicherkarte 1 auftreten kann.

In der in der Fig. 4 dargestellten Spielposition sind das Steckerelement 3 des elektronischen Gerätes und das Steckerelement 2 der Speicherkarte 1 miteinander kontaktiert, so daß auf der Speicherkarte gespeicherte Informationen von dem elektronischen Gerät gelesen werden können oder in umgekehrter Weise von dem elektronischen Gerät Informationen in die Speicherkarte 1 eingeschrieben werden können.

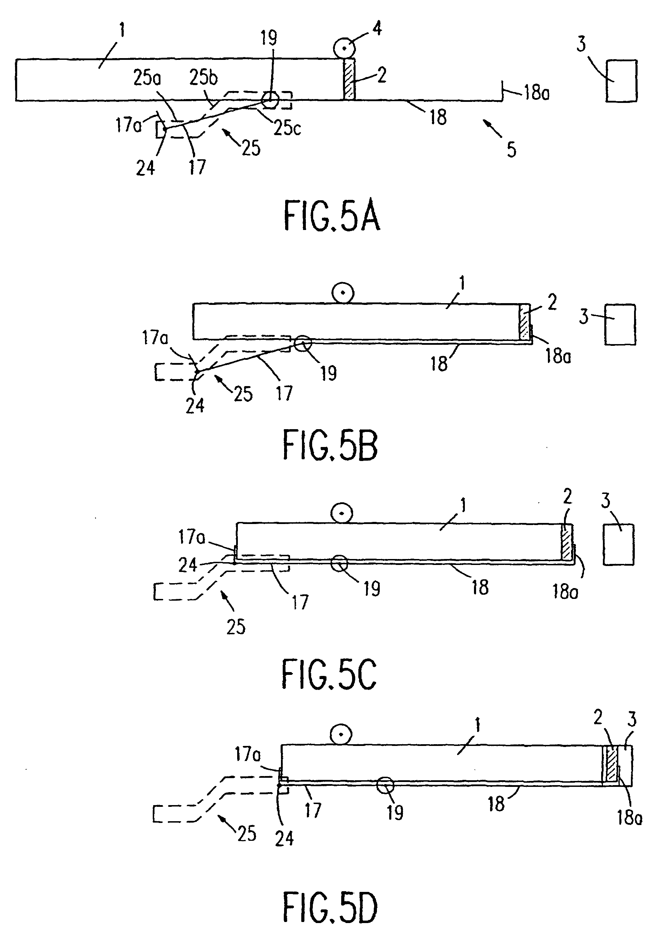

Das Zusammenspiel zwischen dem ersten und dem zweiten Transportmechanismus wird nachfolgend anhand der Fig. 5a, 5b, 5c und 5d veranschaulicht. Die Fig. 5a bis 5d zeigen jeweils in Seitenansicht verschiedene Ladepositionen des Transportschlittens und der Speicherkarte.

Fig. 5a zeigt schematisch den Transportschlitten 5 und die Speicherkarte 1 in der Auswurfposition. Das hintere Teil 17 des Transportschlittens 5 mit der hinteren Anschlagkante 17a ist nach unten unter die Speicherkarte 1 weggeschwenkt, so daß nachfolgend die Speicherkarte 1 mittels der Antriebsrolle 4 in der Laderichtung y in das elektronische Gerät eingefahren werden kann. Das hintere Teil 17 des Transportschlittens 5 weist einen Führungsstift 24 auf, der in einer Führungskontur 25 geführt ist. Die Führungskontur 25 ist an der Chassisplatte 11 befestigt. Sie weist einen ersten horizontalen Abschnitt 25a, einen geneigten Abschnitt 25b und einen zweiten horizontalen Abschnitt 25c auf. In der in der Fig. 1 dargestellten Auswurfposition befindet sich der Führungsstift 24 am Anfang des horizontalen Abschnitts 25a.

Ausgehend von der in der Fig. 5a dargestellten Auswurfposition wird die Speicherkarte 1 mittels der Antriebsrolle 4 in der Laderichtung y transportiert, bis die Speicherkarte 1 mit ihrer Vorderkante 1a gegen die vordere Anschlagkante 18a des Transportschlittens 5 stößt. Dadurch wird der Übergang auf den zweiten Transportmechanismus eingeleitet. Die Speicherkarte 1 drückt, zunächst noch angetrieben von der Antriebsrolle 4, gegen die vordere Anschlagkante 18a des Transportschlittens 5 und nimmt diesen in y-Richtung mit. Dadurch wird, wie zu Fig. 3 beschrieben, die Antriebsrolle 4 ausgekoppelt und die Koppelmutter 14 in das Schraubengewinde 9 der Antriebswelle 6 eingekoppelt.

In der Fig. 5b, die der Fig. 3 entspricht, befindet sich der Führungsstift 24 des hinteren Teils 17 des Transportschlittens 5 am Ende des ersten horizontalen Abschnitts 25a. Der Transport des Transportschlittens 5 bis in diese Position erfolgte mittels der von der Antriebsrolle 4 angetriebenen Speicherkarte 1. In der in der Fig. 5b dargestellten Position ist die Antriebsrolle 4 nun gerade ausgekoppelt und die Koppelmutter 14 gemäß Fig. 3 gerade in das Schraubengewinde 9 eingekoppelt.

Ausgehend von der in der Fig. 5b dargestellten Position wird der Transportschlitten 5 mittels des Koppelhebels 10 mit einer großen Kraft in der Laderichtung y transportiert, wodurch der Führungsstift 24 in dem geneigten Abschnitt 25b der Führungskontur 25 angehoben wird. Dadurch gelangt die hintere Anschlagkante 17a des hinteren Teils 17 hinter die rückwärtige Kante 1b der Speicherkarte 1. Diese Position, die als Zwischenposition bezeichnet wird, ist in der Fig. 5c dargestellt.

In der Fig. 5c dargestellten Zwischenposition besteht nun ein Formschluß zwischen der Speicherkarte 1 und dem Transportschlitten 5, und die Speicherkarte 1 kann mit einer hohen Kraft von dem Transportschlitten 5 in die in der Fig. 5d dargestellte Spielposition gedrückt werden.

Die in der Fig. 5d dargestellte Spielposition entspricht der Fig. 4. In der Spielposition befindet sich der Führungsstift 24 am Ende des zweiten horizontalen Abschnitts 25c, und das Steckerelement 2 der Speicherkarte 1 ist mit dem Steckerelement 3 des elektronischen Gerätes in Eingriff.

Das Entladen der Speicherkarte 1 erfolgt in genau umgekehrter Weise, d.h. ausgehend von der in der Fig. 5d dargestellten Spielposition wird der Transportschlitten 5 mittels des Koppelhebels 10 entgegen der Laderichtung y verfahren, wodurch die vordere Anschlagkante 18a des Transportschlittens 5 gegen die Vorderkante 1a der Speicherkarte 1 drückt. Dadurch gelangt die Speicherkarte 1 zunächst in die Position gemäß Fig. 5c. Nachfolgend wird das hintere Teil 17 des Transportschlittens 5 nach unten weggeschwenkt sowie die Koppelmutter 14 aus dem Schraubengewinde 9 ausgekoppelt und gegen die Antriebsrolle 4 gedrückt. Dadurch übernimmt die Antriebsrolle 4 wieder den Transport der Speicherkarte 1 und transportiert diese in die in der Fig. 5a dargestellte Auswurfposition.

## Patentansprüche

1. Lademechanismus zum Be- und/oder Entladen eines elektronischen Gerätes mit wenigstens einer Speicherkarte (1), wobei
ein erster Transportmechanismus (4) zum Transport der Speicherkarte (1) zwischen einer Auswurfposition und einer Zwischenposition,
ein zweiter Transportmechanismus (5) zum Transport der Speicherkarte (1) zwischen der Zwischenposition und einer Spielposition,
und ein Motor (7) zum Antrieb der beiden Transportmechanismen (4, 5) vorgesehen sind, **dadurch gekennzeichnet, dass** zum Transport der Speicherkarte (1) zwischen der Zwischenposition und der Spielposition der zweite Transportmechanismus (5) mittels eines Schraubengetriebes (9, 14) mit dem Motor (7) koppelbar ist.

2. Lademechanismus nach Anspruch 1, **dadurch gekennzeichnet, daß** der erste Lademechanismus, eine Antriebswelle (6) aufweist, auf der wenigstens eine Antriebsrolle (4) angeordnet ist, daß die Antriebsrolle (4) zum Transport der Speicherkarte (1) zwischen der Auswurfposition und der Zwischenposition vorgesehen ist, wobei die Antriebsrolle (4) beim Transport der Speicherkarte (1) zwischen der Auswurfposition und der Zwischenposition mit der Speicherkarte (1) kraftschlüssig gekoppelt ist.

3. Lademechanismus nach Anspruch 2, **dadurch gekennzeichnet, daß** das Schraubengetriebe (9, 14) auf der Antriebswelle (6) angeordnet ist.

4. Lademechanismus nach Anspruch 3, **dadurch gekennzeichnet, daß** die Antriebswelle (6) ein Schraubengewinde (9) aufweist, daß eine Koppelmutter (14) axial verschieblich auf der Antriebswelle (6) gelagert ist und daß ein Koppelmechanismus (10) vorgesehen ist, der in Abhängigkeit der Position der Speicherkarte (1) die Antriebsrolle (4) kraft- oder formschlüssig mit der Antriebswelle (6) koppelt oder die Koppelmutter (14) in das Schraubengewinde (9) einkoppelt, wobei die Koppelmutter (14) und das Schraubengewinde (9) das Schraubengetriebe (9, 14) bilden.

5. Lademechanismus nach Anspruch 1, **dadurch gekennzeichnet, dass** der zweite Transportmechanismus eines Transportschlitten (5) ausweist, der mittels eines Koppelhebels (10) mit dem Schraubengetriebe (9, 14) koppelbar ist, dass der Transportschlitten (5) mittels des Motors (7), mittels des Schraubengetriebes (9, 14) und mittels des Koppelhebels (10) zwischen der Zwischenposition und der Spielposition transportierbar ist, wobei der Transportschlitten (5) dabei formschlüssig mit der Speicherkarte (1) gekoppelt ist.

6. Lademechanismus nach Anspruch 5, **dadurch gekennzeichnet, daß** der Transportschlitten (5) eine hintere Anschlagkante (17a) zum Transport der Speicherkarte (1) von der Zwischenposition in die Spielposition und eine vordere Anschlagkante (18a) zum Transport der Speicherkarte (1) von der Spielposition in die Zwischenposition aufweist.

7. Lademechanismus nach Anspruch 5, **dadurch gekennzeichnet, daß** der Transportschlitten (5) zweiteilig mit einem vorderen (18) und einem hinteren Teil (17) ausgebildet ist, daß das hintere Teil (17) schwenkbar an dem vorderen Teil (18) gelagert ist, daß das hintere Teil (17) die hintere Anschlagkante (17a) und das vordere Teil (18) die vordere Anschlagkante (17a) aufweist, und daß das hintere Teil (17) mit der hinteren Anschlagkante (18a) mittels einer Führungskontur (25) bei Bewegung des Transportschlittens (5) in der Laderichtung auf die Speicherkarte (1) zuschwenkbar ist und bei Bewegung des Transportschlittens (5) entgegen der Laderichtung von der Speicherkarte (1) wegschwenkbar ist.

8. Lademechanismus nach Anspruch 2, **dadurch gekennzeichnet,**
**daß** die Antriebsrolle (4) drehbar auf der Antriebswelle (6) gelagert ist und daß die Antriebsrolle (4) zum Transport der Speicherkarte (1) zwischen der Auswurfposition und der Zwischenposition mit der Antriebswelle (6) mittels einer Reib- oder Klauenkupplung koppelbar ist.

9. Elektronisches Gerät zum Lesen von auf einer Speicherkarte (1) gespeicherten Information und/oder zum Schreiben von Informationen auf eine Speicherkarte (1), wobei ein Kontaktierungselement (3) zum Kontaktieren der Spreicherkarte, ein Lademechanismus für die Speicherkarte (1) mit einem ersten Transportmechanismus (4) zum Transport der Speicherkarte (1) zwischen einer Auswurfposition und einer Zwischenposition,
ein zweiter Transportmechanismus (5) zum Transport der Speicherkarte (1) zwischen der Zwischenposition und einer Spielposition, und
ein Motor (7) zum Antrieb der beiden Transportmechanismen vorgesehen sind,
**dadurch gekennzeichnet, dass** zum Transport der Speicherkarte (1) zwischen der Zwischenposition und der Spielposition der zweite Transportmechanismus (5) mittels eines Schraubengetriebes (9, 14) mit dem Motor (7) koppelbar ist.

## Claims

1. A loading mechanism for loading and/or unloading at least one memory card (1) into/from an electronic apparatus, comprising
a first transport mechanism (4) for the transport of the memory card (1) between an eject position and an intermediate position,
a second transport mechanism (5) for the transport of the memory card (1) between the intermediate position and a play position, and
a motor (7) for driving the two transport mechanisms (4, 5),
**characterized in that** for the transport of the memory card (1) between the intermediate position and the play position the second transport mechanism (5) can be coupled to the motor (7) by means of a lead screw transmission (9, 14).

2. A loading mechanism as claimed in Claim 1, **characterized in that** the first transport mechanism includes a drive shaft (6) which carries at least one drive roller (4), and the drive roller (4) serves for the transport of the memory card (1) between the eject position and the intermediate position, the drive roller (4) being non-positively coupled to the memory card (1) during the transport of the memory card (1) between the eject position and the intermediate position.

3. A loading mechanism as claimed in Claim 2, **characterized in that** the lead screw transmission (9, 14) is mounted on the drive shaft (6).

4. A loading mechanism as claimed in Claim 3, **characterized in that** the drive shaft (6) has a screwthread (9), a coupling nut (14) is mounted on the drive shaft (6) so as to be axially movable, and there has been provided a coupling mechanism (10) which, depending on the position of the memory card (1) couples the drive roller (4) non-positively or positively to the drive shaft (6) or causes the coupling nut (14) to engage with the screwthread (9) in such a manner that the coupling nut (14) and the screwthread (9) form the lead screw transmission (9, 14).

5. A loading mechanism as claimed in Claim 1, **characterized in that** the second transport mechanism includes a transport slide (5) which can be coupled to the lead screw transmission (9, 14) by means of a coupling lever (10), and the transport slide (5) is movable between the intermediate position and the play position by means of the motor (7), by means of the lead screw transmission (9, 14) and by means of the coupling lever (10), the transport slide (5) then being positively coupled to the memory card (1).

6. A loading mechanism as claimed in Claim 5, **characterized in that** the transport slide (5) has a rear stop edge (17a) for the transport of the memory card (1) from the intermediate position into the play position and a front stop edge (18a) for the transport of the memory card (1) from the play position into the intermediate position.

7. A loading mechanism as claimed in Claim 5, **characterized in that** the transport slide (5) comprises two parts with a front part (18) and a rear part (17), the rear part (17) being mounted on the front part (18) so as to be pivotable, the rear part (17) comprises the rear stop edge (17a) and the front part (18) comprises the front stop edge (17a), and the rear part (17) with the rear stop edge (18a) is pivotable towards the memory card (1) by means of a guide member (25) during a movement of the transport slide (5) in the loading direction and is pivotable away from the memory card (1) during a movement of the transport slide (5) in a direction opposite to the loading direction.

8. A loading mechanism as claimed in Claim 2, **characterized in that** the drive roller (4) is mounted on the drive shaft (6) so as to be rotatable and the drive roller (4) can be coupled to the drive shaft (6) by means of a friction coupling or claw coupling for the transport of the memory card (1) between the eject position and the intermediate position.

9. An electronic apparatus for reading information stored on a memory card (1) and/or for writing information onto a memory card (1), comprising a contact element (3) for making contact with the memory card,
a loading mechanism for the memory card (1) comprising a first transport mechanism (4) for the transport of the memory card (1) between an eject position and an intermediate position,
a second transport mechanism (5) for the transport of the memory card (1) between the intermediate position and a play position, and
a motor (7) for driving the two transport mechanisms,
**characterized in that** for the transport of the memory card (1) between the intermediate position and the play position the second transport mechanism (5) can be coupled to the motor (7) by means of a lead screw transmission (9, 14).

## Revendications

1. Mécanisme de chargement pour le chargement et/ou le déchargement d'un appareil électronique avec au moins une carte de mémoire (1), dans lequel
un premier mécanisme de transport (4) est prévu pour le transport de la carte de mémoire (1) entre une position d'éjection et une position intermédiaire,
un deuxième mécanisme de transport (5) est prévu pour le transport de la carte de mémoire (1) entre la position intermédiaire et une position de lecture,
et un moteur (7) est prévu pour l'entraînement des deux mécanismes de transport (4, 5), **caractérisé en ce que** le deuxième mécanisme de transport (5) peut être couplé au moteur (7) à l'aide d'un mouvement à vis (9, 14) pour le transport de la carte de mémoire (1) entre la position intermédiaire et la position de lecture.

2. Mécanisme de chargement selon la revendication 1, **caractérisé en ce que** le premier mécanisme de chargement présente un axe d'entraînement (6) sur lequel est disposé au moins un galet d'entraînement (4) de telle sorte que le galet d'entraînement (4) soit prévu pour le transport de la carte de mémoire (1) entre la position d'éjection et la position intermédiaire, le galet d'entraînement (4) étant couplé avec la carte de mémoire (1) par crabot lors du transport de la carte de mémoire (1) entre la position d'éjection et la position intermédiaire.

3. Mécanisme de chargement selon la revendication 2, **caractérisé en ce que** le mouvement à vis (9, 14) est disposé sur l'axe d'entraînement (6).

4. Mécanisme de chargement selon la revendication 3, **caractérisé en ce que** l'axe d'entraînement (6) présente un filet de vis (9), qu'un écrou d'accouplement (14) est logé à coulissement axial sur l'axe d'entraînement (6) et qu'il est prévu un mécanisme d'accouplement (10) qui accouple par adhérence ou crabot le galet d'entraînement (4) avec l'axe d'entraînement (6) en fonction de la position de la carte de mémoire (1) ou introduit l'écrou d'accouplement (14) dans le filet de vis (9), l'écrou d'accouplement (14) et le filet de vis (9) formant le mouvement à vis (9, 14).

5. Mécanisme de chargement selon la revendication 1, **caractérisé en ce que** le deuxième mécanisme de transport présente un chariot de transport (5) qui peut être couplé à l'aide d'un levier d'accouplement (10) au mouvement à vis (9, 14), que le chariot de transport (5) peut être transporté à l'aide du moteur (7), à l'aide du mouvement à vis (9, 14) et du levier d'accouplement (10) entre la position intermédiaire et la position de lecture, le chariot de transport (5) étant en l'occurrence couplé par crabot avec la carte de mémoire (1).

6. Mécanisme de chargement selon la revendication 5, **caractérisé en ce que** le chariot de transport (5) présente un bord de butée postérieur (17a) pour le transport de la carte de mémoire (1) de la position intermédiaire dans la position de lecture et un bord de butée antérieur (18a) pour le transport de la carte de mémoire (1) de la position de lecture dans la position intermédiaire.

7. Mécanisme de chargement selon la revendication 5, **caractérisé en ce que** le chariot de transport (5) est formé de deux parties avec une partie antérieure (18) et une partie postérieure (17), que la partie postérieure (17) est logée à pivotement sur la partie antérieure (18), que la partie postérieure (17) présente le bord de butée postérieur (17a) et la partie antérieure (18) le bord de butée antérieur (18a) et que la partie postérieure 17 peut pivoter avec le bord de butée postérieur (18a) à l'aide d'un contour de guidage (25) lors du déplacement du chariot de transport (5) dans la direction de chargement sur la carte de mémoire (1) et s'éloigner par pivotement lors du mouvement du chariot de transport (5) dans le sens contraire de la direction de chargement de la carte de mémoire (1).

8. Mécanisme de chargement selon la revendication 2, **caractérisé en ce que** le galet d'entraînement (4) est logé à rotation sur l'axe d'entraînement (6) et que le galet d'entraînement (4) peut être accouplé pour le transport de la carte de mémoire (1) entre la position d'éjection et la position intermédiaire avec l'axe d'entraînement (6) à l'aide d'un accouplement à friction ou à griffes.

9. Appareil électronique pour la lecture d'informations enregistrées sur une carte de mémoire (1) et/ou pour l'enregistrement d'informations sur une carte de mémoire (1),
un élément de contact (3) étant prévu pour la mise en contact de la carte de mémoire, un mécanisme de chargement pour la carte de mémoire (1) avec un premier mécanisme de transport (4) pour le transport de la carte de mémoire (1) entre une position d'éjection et une position intermédiaire, un deuxième mécanisme de transport (5) pour le transport de la carte de mémoire (1) entre la position intermédiaire et une position de lecture et un moteur (7) pour l'entraînement des deux mécanismes de transport, **caractérisé en ce que** le deuxième mécanisme de transport (5) doit être couplé au moteur (7) à l'aide d'un mouvement à vis (9, 14) pour le transport de la carte de mémoire (1) entre la position intermédiaire et la position de lecture.
